(19) Europäisches Patentamt
European Patent Office
Office européen des brevets

(11) Publication number: 0 102 503
A2

(12) EUROPEAN PATENT APPLICATION

(21) Application number: 83107299.6

(22) Date of filing: 25.07.83

(51) Int. Cl.³: C 08 F 10/00
C 08 F 4/64

(30) Priority: 26.07.82 JP 130189/82

(43) Date of publication of application:
14.03.84 Bulletin 84/11

(84) Designated Contracting States:
AT BE DE FR

(71) Applicant: TOYO STAUFFER CHEMICAL CO. LTD.
7-7, Akasaka 1-chome Minato-ku
Tokyo(JP)

(72) Inventor: Takitani, Masaru
No. 2612-76, Ooaza Fukugawa
Shinnanyo-shi Yamaguchi-ken(JP)

(72) Inventor: Tomiyasu, Shizuo
No. 1031-38, Ooaza Tonda
Shinnanyo-shi Yamaguchi-ken(JP)

(72) Inventor: Baba, Keikichi
No. 2591, Ooaza Tonda
Shinnanyo-shi Yamaguchi-ken(JP)

(74) Representative: Patentanwälte TER MEER - MÜLLER - STEINMEISTER
Triftstrasse 4
D-8000 München 22(DE)

(54) **Process for producing a catalyst component used for the polymerization of alpha-olefins.**

(57) A process for producing a catalyst component used for the polymerization of an α-olefin comprising treating a solid product which is obtained by reacting an organomagnesium compound with a halogenation agent in the presence of an electron donor compound, with a mixture of a halogenated silicon compound and a titanium compound, which has particle size abundant in uniformity, a good flowability and in addition a high polymerization activity and yield ratio of stereo-specific polymers.

EP 0 102 503 A2

DETAILED EXPLANATION OF THE INVENTION

This invention relates to a process for producing a novel ziegler-type supported catalyst component (hereinafter merely referred to as catalyst component for the abbreviation except for particularly otherwise stated) used for the polymerization of α-olefins which has particle size abundant in uniformity, a good flowability and in addition a high polymerization activity and yield ratio of stereospecific polymers.

More particularly, it relates to a process for producing a catalyst component used for the polymerization of an α-olefin, which comprises treating a solid product which is obtained by reacting an organomagnesium compound shown by the general formula, R'MgX', wherein R' represents a hydrocarbon group having 1 to 20 carbon atoms and X' represents a halogen atom or a hydrocarbon group having 1 to 20 carbon atoms with a halogenation agent in the presence of an electron donor compound, with a mixture of a halogenated silicon compound and a titanium compound shown by the general formula, $Ti(OA)_l X_{4-l}$, wherein A represents an aryl group, X represents a halogen atom and l represents a real number of more than zero and less than 4.

Features of this invention which are to be expressly stated lie not only in that weights of product polymers obtainable from the catalyst component are large based on the unit weight of the catalyst component, that is, the polymerization activity is high but also in that the bulkj density of the product polymer and the production ratio of the stereospecific polymers, in which drawbacks of known Ziegler-Type supported catalysts exist, are greatly improved. Furthermore, a feature of this invention other than the above stated features, which is to be expressly stated, lies in that it makes possible the stereospecific polymerization of α-olefins, especially propylene in a high temperature, which has hithertofore been very difficult.

In general, it is well known that so called Ziegler -Natta catalyst comprising a compound of a transition metal of groups IV to VI of the periodic table and an organometallic compound of a metal of groups I to III is used as the catalyst for producing stereospecific α-olefin polymers.

In cases wherein polymers of α-olefins such as propylene, butene 1 and the like are industrially produced, catalyst components containing titanium trichloride as the main component is used as the compounds of the transition metals of groups IV to VI. These catalyst compounds are such ones resulting from the activation treatment of an eutectic crystals comprising titanium trichloride and aluminum chloride which are obtained by reducing titanium tetrachloride with metallic aluminum, by means of the pulverization and the like; or a catalyst component resulting from titanium trichloride that is activated by treating titanium trichloride which is obtained by reducing $TiCl_4$ with an organoaluminum compound with an organic ether compound and titanium tetrachloride is used as the above stated compound of the transition metal of the groups IV to VI of the periodic table. It is general to use the catalyst component in a catalyst system in the polymerization of α-olefins, in which the catalyst component is coupled with an organoaluminum compound.

However, α-olefin polymers produced by the polymerization carried out in the presence of the catalyst system contain catalyst residues in an amount of several hundred ppm and it is necessary to remove the transition metal such as titanium and the like among the catalyst residues remaining in the polymer as far as possible because it promote the degradation of the polymers, and therefore, it is the present situation wherein the catalyst is removed by washing the product polymers with alcohols in a production step of α-olefin polymers.

Recently for the purpose of reducing the production cost of α-olefins, many catalysts component have been proposed for the purpose that high polymerization activity is attached so as to eliminate the deashing step in which the transition metal such as titanium and the like is removed by washing in the polymerization steps. That is to say, it is aimed to reduce the production cost of α-olefins in a way in that if it is possible to attain the amount of the product polymer to a value of one hundred thousand or some hundred thousand weight parts based on the unit weight of the transition metal such us titanium, then the content of the transition metal such as titanium which remains in the product polymer becomes several ppm or less and therefore the promotion of the degradation of the polymer due to the transition metal reaches to a level which could be neglected, to make possible to omit the deashing processing.

Most of those catalyst components are Zieglar-Type supported catalyst components having as carrier magnesium chloride or magnesium chloride having surface treatment applied by some processes, on which surface titanium trichloride is supported. However, in the process for the production of the catalyst components in which magnesium chloride is used as the starting material for the carrier, not only the catalyst components produced by using the magnesium chloride but also the polymer have been remarkably inferior to in particle characteristics such as flowability, because it is necessary to provide with a pulverizing step in which the magnesium chloride is

pulverized and activated at the same time and further the pulverization give magnesium chloride in a powder state of a crushed pieces lacking the uniformity of particle size, as well as ones produced at the same time very fine powder state in a large amount.

Recently, there are many propositions as to catalyst components improved in the particle characteristics, in which organomagnesium compounds are used as the starting materials on the production of the carriers. Typical one among these proposition are exemplified as follows:

There are proposed in Japanese unexamined patent application publication No. 123594/1979, a process in that after a complex consisting of an organomagnesium compound and an organoaluminum compound is reacted with tertiary alkyl halide, the resulting product is treated with a carboxylic acid ester and titanium tetrachloride; in Japanese unexamined patent application publication No. 133584/1979, a process in which after a solid state product obtained by the reaction of an organomagnesium compound and an organohalide is treated with an electron donor compound, titanium tetrachloride is supported on the product; in Japanese unexamined patent application publication No. 76492/1979, a process in which after a reaction product of an organomagnesium compound and a polyhydric alcohol is treated with an electron donor compound, titanium tetrachloride is supported on the product; in Japanese unexamined patent application publication Nos. 43094/1978 and 107987/1979, a process in which tetrachlorotitanium is supported on a

carrier obtained by reacting tetrachlorosilicon with a reaction product of an organomagnesium compound and a hydropolysiloxane, or on a carrier obtained by directly reacting tetrachlorosilicon with the organomagnesium compound; in Japanese unexamined patent application publication No. 58207/1980, a process in which a solid reaction product obtained by reacting an organomagnesium compound with tetrachlorosilicon is treated with an alcohol and a carboxylic acid ester, and then treated with tetrachlorotitanium; in Japanese unexamined patent application publication No. 133408/1980, a process in which a solid state organomagnesium compound is treated with an aromatic alcohol and an electron donor compound, and then treated with titanium tetrachloride; and in Japanese unexamined patent application publication No. 59914/1982, a process in which a solid state product obtained by reacting an organomagnesium compound with silicon tetrachloride or a halogen-containing organoaluminum compound is treated with a titanium compound having a bonding between titanium and phenoxy group as well as a bonding between titanium and a halogen in the presence of an inert solvent.

However, these catalyst components and the like have drawbacks in that they may be ones having not so high polymerization activity so as to be able to eliminate the deashing step or ones showing low production ratio of stereospecific polymers, even though they have high polymerization activity, or they may shown high polymerization activity at the first stage of the polymerization with rapid reduction in the polymerization activity or they may give product polymers

of low bulk density. Therefore it seems that they have not yet been actually used.

Furthermore, another drawback of known Ziegler-Type supported catalyst components lies in polymerization characteristics in high temperature. That is to say, it is necessary for high activity catalyst components to have characteristics capable of sufficiently maintaining their performance on the polymerization of α-olefins at high temperature, because the more the catalyst components are high in activity, the more the instantaneous calorific powers are large and accordingly, it may substantially impossible to prevent localized overheatings if it could be possible to effect the overall temperature-control within polymerization vessels.

On the other hand, research and development as to processes for the gas-phase polymerization of α-olefins have recently been flourishingly conducted for the purpose of simplifying the polymerization processes of α-olefins. The gas-phase polymerization is to polymerizing α-olefins in a high temperature, and it is usual in the case of the gas-phase polymerization of propylene, for example, to carry out it at a high temperature not less than 90°C.

The production ratio of stereospecific polymers may be remarkably reduced in the polymerization using known catalyst components at a temperature more than 80°C, which is usually carried out at a temperature of 60-70°C, or at most 80°C of the upper limit and therefore they can not apply to the polymerization of propylene at the high temperature.

In addition, it is necessary that the catalyst components which are used in a process using a fluidized bed as the polymerization apparatus of the gas-phase polymerization should be abundant in the uniformity of particle size but it is difficult to apply to the process a catalyst component produced, for example, by a process having a co-pulverization step because it lacks the uniformity of particle size and has very fine particles in much amount.

Accordingly, it has been desired in the field of the gas-phase polymerization of α-olefins to develop catalyst components which are excellent in polymerization characteristics in high temperature and abundant in the uniformity of particle size.

The inventors have accomplished this invention as a result of extensive research carried out for improving the above stated drawbacks which the above mentioned Ziegler-Type catalyst components supporting titanium have.

That is to say, this invention relates to a process for producing a catalyst component used for the polymerization of an α-olefin comprising treating a solid product which is obtained by reacting an organomagnesium compound shown by the general formula, R'MgX', wherein R' represents a hydrocarbon group having 1 to 20 carbon atoms and X' represents a halogen atom or a hydrocarbon group having 1 to 20 carbon atoms with a halogenation agent in the presence of an electron donor compound, with a mixture of a halogenated silicon compound and a titanium compound shown by the general formula

$$Ti(OA)_l X_{4-l}$$

wherein A represents an aryl group, X represents a halogen atom and l represents a real number of $0 < l < 4$.

A features of this invention on the production of the catalyst component lies in being provided as necessary conditions with that the reaction of the organomagnesium compound and the halogenating agent is carried out in the presence of the electron donor compound and that the thus produced solid state product is treated with the halogenated silicon compound and $Ti(OA)_l X_{4-l}$, wherein A shows an aryl group having 6 to 20 carbon atoms, X shows a halogen atoms and l shows a real number of $0 < l < 4$. It's advantages, not only, lie in that the catalyst component and the polymer are excellent in particle characteristics and are high in the polymerization activity as well as the production ratio of stereospecific polymers but also lie in that it can greatly improve the bulk density of polymers, where known Ziegler-Type supported catalyst components have drawbacks. Further surprising advantages of this invention lie in that it is made possible to conduct the stereospecific polymerization of α-olefins in high temperature, for example, the stereospecific polymerization of propylene at a temperature not lower than 90°C, which has been very difficult, so that it is possible to carry out a stable stereospecific polymerization of α-olefins, even when a Ziegler-Type supported catalyst is used and in addition it is made possible to conduct the gas-phase polymerization of α-olefins.

This invention is further explained in detail hereinbelow.

The electron donor compounds which can be used in this invention are at least one class of compound selected from organic acid esters, organic ether compounds, polysiloxanes, thioethers, organic ketones and amines, or their mixtures.

The above stated organic acid esters are particularly aliphatic carboxylic acid esters and aromatic carboxylic acid esters.

Examples of the aliphatic carboxylic acid esters are primary alkyl esters of saturated aliphatic carboxylic acid such as methyl formate, ethyl acetate, n-amyl acetate, 2 -ethyl hexyl acetate, n-butyl formate, ethyl butyrate ethyl valerate and the like; alkenyl saturated carobxylates such as vinyl acetate, allyl acetate and the like; primary alkyl unsaturated aliphatic carboxylates such as methyl acrylate, methyl methacrylate, n-butyl crotonate and the like; polyvalent carboxylic acid esters such as 2-ethyl hexyl adipate and the like; and lactones such as γ-butyrolactone, δ-valero lactone and the like.

Examples of aromatic carboxylic acid esters are primary alkyl esters of benzoic acid such as methyl benzoate, ethyl benzoate, n-propyl benzoate, n- or iso-butyl benzoate, n- or iso-amyl benzoate, n-hexyl benzoate, n-octyl benzoate, 2-ethyl hexyl benzoate and the like; primary alkyl esters of toluic acid such as methyl toluate, ethyl toluate, n- or iso-butyl toluate, 2-ethyl hexyl toluate and the like; primary alkyl esters of anisic acid such as methyl anisate, ethyl anisate, n-propyl anisate and the like; primary alkyl esters of

naphthoic acid such as methyl naphthoate, ethyl naphthoate, n-propyl naphthoate, n-butyl naphthoate, 2-ethyl hexyl naphthoate and the like; and aromatic lactones such as coumarin, phthalides and the like. Among them, methyl benzoate, ethyl benzoate, methyl toluate, ethyl toluate, methyl anisate, ethyl anisate, methyl naphthoate and ethyl naphthoate are effective.

The above stated organic ether compounds as the electron donor compounds are compounds having an ether bonding, which are shown by the general formula, $R^2OR^3$, wherein $R^2$ and $R^3$ represent hydrocarbon groups having 1 to 15 carbon atoms, which can be same or different to each other; polyethers having at least two of the ether-bonding within one molecule; and cyclic ethers having rings formed within the ether molecules. Particularly, there are exemplified aliphatic ethers such as ethyl ether, propyl ether, isopropyl ether, butyl ether, isobutyl ether, amyl ether, isoamyl ether, hexyl ether, octyl ether, decyl ether, dodecyl ether, methyl propyl ether, methyl isopropyl ether, methyl butyl ether, methyl isobutyl ether, methyl amyl ether, methyl isoamyl ether, methyl hexyl ether, ethyl propyl ether, ethyl isopropyl ether, ethyl butyl ether, ethyl isobutyl ether, ethyl amyl ether, ethyl isoamyl ether, ethyl hexyl ether, vinyl ether, allyl ether, methyl allyl ether, ethyl vinyl ether, ethyl allyl ether, butyl vinyl ether and the like; aromatic ethers such as anisole, phenetole, butyl phenyl ethers, amyl phenyl ethers, methoxy toluenes, benzyl ethyl ether, phenyl ether, benzyl ether, phenyl benzyl ether, naphthyl ether, veratrole and the like; cyclic ethers

such as propylene oxide, trimethylene oxide, epoxybutane, dioxane, trioxane, furan, methyl furans tetrahydrofuran, tetrahydropyran, cineole and the like; and polyethers such as dimethoxyethane, diethoxyethane, dibutoxyethane, diethyleneglycol dimethyl ether, diethyleneglycol diethyl ether, diethyleneglycol dibutyl ether, methylal, acetal, glycerol ethers, crown ethers and the like.

As to the above stated polysiloxanes as the electron donor compounds, there are exemplified siloxane polymers having repeating units shown by the general formula

$$-\!\left[ \overset{A}{\underset{Z}{Si}} - O \right]_n\!-$$

wherein A and Z represent groups which can bond to silicon, for example, hydrogen, alkyl groups having carbon numbers of 1 to 8, aryl group having carbon numbers not more than 10, halogens, alkoxyl groups having carbon numbers of 1 to 8, aryloxyl groups having carbon numbers not more than 10, aliphatic carboxylic acid residues having carbon numbers not more than 20 and the like, and n represents a number of 3 to 10000; or siloxane polymers having at least two species of the above stated repeating units in molecule in various ratios and distributions. Particularly, there are exemplified, for example, alkylsiloxane polymers such as octamethyl trisiloxane, octaethyl cyclotetrasiloxane, dimethyl polysiloxane, methyl ethyl polysiloxane and the like; arylsiloxane polymers such as hexaphenyl cyclotrisiloxane, diphenyl polysiloxanes and the like; alkylaryl siloxane polymers such as diphenyl

hexamethyl tetrasiloxane, methyl phenyl polysiloxanes and the like; haloalkylsiloxanes such as 1,5-dichlorohexamethyl trisiloxane, 1,7-dichlorooctamethyl tetrasiloxane and the like; alkoxy siloxane polymers such as dimethoxypolysiloxanes, diethoxypolysiloxanes and the like; aryloxy siloxane polymers such as diphenoxypolysiloxanes; and the like.

The above stated thioethers as the electron donor compounds are compounds shown by the general formula $R^4SR^5$, wherein $R^4$ and $R^5$ represent hydrocarbon groups having carbon numbers of 1 to 20. Particularly, there are exemplified diethyl thioether, di-n-propyl thioether, di-n-butyl thioether, di-n-amyl thioether, di-n-hexyl thioether, di-n-octyl thioether, di-n-decyl thioether, methyl phenyl thioether, ethyl phenyl thioether, diphenyl thioether, ditoluyl thioether, dibenzyl thioether, diallyl thioether, allyl phenyl thioether and the like.

As to the above stated organic ketones as the electron donor compounds, there are exemplified compounds shown by the general formula, $R^6COR^7$, wherein $R^6$ and $R^7$ represent hydrocarbon groups, for example, of which hydrocarbon groups are such ones as alkyl groups having carbon numbers of 1 to 15, such as methyl, ethyl, propyl, butyl, pentyl, octyl and the like, aryl groups having carbon numbers not more than 15 such as phenyl, toluyl, xylyl and the like, aralkyl groups having carbon numbers not more than 15 such as benzyl. As particular ones, there are exemplified aliphatic ketones such as acetone, methyl ethyl ketone, dibutyl ketone, dipentyl

ketone and the like; aromatic ketones such as acetophenone, benzophenone and the like; and the like.

As to the above stated amines as the electron donor compounds, there are exemplified compounds shown by the general formula, 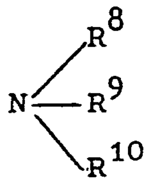 , wherein $R^8$ represents a hydrocarbon group and $R^9$ and $R^{10}$ represent hydrogen or hydrocarbon groups, for example, ones of which hydrocarbon groups are alkyl groups having carbon numbers of 1 to 15, such as methyl, ethyl, propyl, butyl, octyl and the like; aryl groups having carbon numbers not more than 15, such as phenyl, toluyl, xylyl and the like; aralkyl groups having carbon numbers not more than 15, such as benzyl; or the like. As particular examples, there are listed aliphatic primary, secondary and tertiary amines such as diethyl amine, triethyl amine, n-propyl amine, di-n-propyl amine, tri-n-propylamine, n-butylamine, di-n-butylamine, tri-n-butylamine, n-octyl amine, di-n-octyl amine, tri-n-octyl amine and the like; aromatic primary, secondary and tertiary amines such as aniline, N-methyl aniline, N,N-dimethyl aniline, diphenyl amine, triphenyl amine, N,N,-dimethyl benzyl amine; and the like. Compounds which have not less than 2 amine nitrogens in molecule, for example, tetramethylmethylene diamine, ethylene diamine, tetramethyl ethylene diamine, tetraethyl ethylene diamine and the like can be also used.

The used amounts of these electron donor compounds vary depending on the species of the electron donor compounds but

are generally not less than 0.001 mol, preferably not less than 0.01 mol, most preferably not less than 0.1 mol based on 1 mol of the organomagnesium compound. The amount less than 0.001 mol gives a low production ratio of the stereospecific polymers and it is difficult to obtain a practical catalyst component. As to the upper limit there is no specific restriction but it is preferable to use them in an amount not more than 20 mols because no specially remarkable effect is obtained by the use of them in an amount more than 20 mols.

The organomagnesium compounds used in this invention are shown by the general formula $R^1MgX^1$, wherein $R^1$ represents a hydrocarbon group having carbon atoms of 1 to 20 and $X^1$ represents a halogen atom selected from chlorine, bromine and iodine or a hydrocarbon group having carbon atoms of 1 to 20. Particularly the following ones can be exemplified: diethyl magnesium, di-n-propyl magnesium, di-iso-propyl magnesium, di-iso-amyl magnesium, iso-amyl ethyl magnesium, iso-amyl -n-propyl magnesium, di-n-amyl magnesium, n-amyl-n-propyl magnesium, n-butyl-n-t-butyl magnesium, n-butyl propyl magnesium, dibutenyl magnesium, di-n-butyl magnesium, n-butyl ethyl magnesium, n-butyl-sec-butyl magnesium, di-t-butyl magnesium, di-sec-butyl magnesium, dicyclopentadienyl magnesium, diphenyl magnesium, di-n-hexyl magnesium, n-hexyl ethyl magnesium, bis(methylcyclopentadienyl)magnesium, dihexynyl magnesium, dicyclohexyl magnesium, dibenzyl magnesium, bis(phenyl ethynyl) magnesium, dicinnamyl magnesium, n-octyl ethyl magnesium, di-n-octyl magnesium, di-n-decyl magnesium, methyl magnesium

chloride, methyl magnesium bromide, methyl magnesium iodide, ethynylene magnesium dibromide, vinyl magnesium chloride, vinyl magnesium bromide, ethyl magnesium chloride, ethyl magnesium bromide, ethyl magnesium iodide, allyl magnesium chloride, propenyl magnesium bromide, isopropenyl magnesium bromide, n-propyl magnesium chloride, n-propyl magnesium bromide, isopropyl magnesium chloride, isopropyl magnesium bromide, 1-methyl propenyl magnesium bromide, tetramethylene magnesium dibromide, t-butyl magnesium chloride, n-butyl magnesium chloride, sec-butyl magnesium chloride, cyclopentadienyl magnesium chloride, cyclopentadienyl magnesium bromide, p-phenylene magnesium dibromide, phenyl magnesium chloride, phenyl magnesium bromide, styryl magnesium chloride, styryl magnesium bromide, 1-methyl-2,2-diphenyl cyclopropyl magnesium bromide, amyl magnesium chloride, hexyl magnesium chloride, benzyl magnesium chloride, octyl magnesium chloride, decyl magnesium chloride and the like. Among these organomagnesium compounds, n-butyl ethyl magnesium, n-hexylethyl magnesium, di-n-hexyl magnesium, n-octyl ethyl magnesium, di-n-butyl magnesium, di-n-octyl magnesium, ethyl magnesium chloride, n-butyl magnesium chloirde, n-octyl magnesium chloride are especially preferable because of their convenience in using.

These organomagnesium compounds are used in this invention after they are solubilized to a solution state by a solvent selected from aliphatic hydrocarbons such as hexane, heptane, a kerosene and the like; alicyclic hydrocarbons such as cyclohexane, methylcyclohexane and the like; aromatic hydrocarbons

such as benzene, toluene, xylene and the like; the above stated organic ether compounds; the above stated amines; or their mixture.

The halogenating agents are reagents which are capable of substituting Mg-hydrocarbon bondings to Mg-halogen bondings in the organomagnesium compounds. Particularly, halosilanes such as silicon tetrachloride, trichlorosilane, monomethyl dichlorosilane, dimethyl chlorosilane, ethyl dichlorosilane, n-propyl dichlorosilane, vinyl dichlorosilane, n-butyl dichlorosilane, phenyl dichlorosilane, benzyl dichlorosilane, allyl dichlorosilane, monomethyl monochlorosilane, monoethyl monochlorosilane, trimethyl monochlorosilane, monomethyl trichlorosilane and the like; organoaluminum halides such as diethyl aluminum chloride, ethyl aluminum dichloride, ethyl aluminum sesquichloride, dimethyl aluminum chloride, methyl aluminum dichloride, methyl aluminum sesquichloride, propyl aluminum dichloride, dipropyl aluminum chloride and the like; thionyl chloride; halogenated hydrocarbons or halogenated carbons such as chloroform, hexachloroethane, carbon tetrachloride, trichlorosilane, dipropyl aluminum chloride and the like; carbon tetrabromide, carbon tetraiodide, t-butyl chloride and the like; metal halides such as $AlCl_3$, $AlBr_3$, $SnCl_4$, $BCl_3$, $SbCl_3$, $ZnCl_2$ and the like; hydrogen halides such as hydrogen chloride and the like; and halogens such as chlorine and the like can be exemplified. However, it is preferable to use carbon tetrachloride, hexachloroethane and the like, because of their economical nature, easiness in handling and performance

as the catalyst.

The organomagnesium compound is admixed with the halogenating agent in this invention to react in the presence of the electron donor compound. This admixing can be carried out either by adding the halogenating agent into the organomagnesium compound or the reverse, or by simultaneously adding both the reactants to admix. However, it is desirable on handing the organomagnesium compound to add and admix the halogenating agent after diluted with a hydrocarbon or without the dilution into a solvent which has dissolved the organomagnesium compound because the organomagnesium compound is generally a viscous substance though it depends on the species and concentration of the organomagnesium compound.

It is preferable that the concentration of the organomagnesium compound in the solvent, which varies depending on the structure of the organomagnesium compound represented by the general formula, $R^1MgX^1$ and on the number of carbon atoms of $R^1$ as well as on the kind of the halogen atom of $X^1$, is not more than 50% by weight, preferably not more than 45% by weight and especially not more than 40% by weight. The viscosity of the solvent which has dissolved the organomagnesium compound increases to make the processing such as stirring and the like difficult when the concentration exceeds 50% by weight, because the organomagnesium compound is a viscous substance as stated above. On the other hand, the lower limiting value is not especially restricted but it is desirable to be not less than 0.1% by weight considering the productivity of the catalyst

components.

It is disirable to have effected the reaction of the organomagnesium compound and the electron donor compound before they are admixed with the halogenating agent in a way in that the electron donor compound is added into the solvent which have dissolved the organomagnesium compound or that after the organomagnesium compound is dissolved in the electron donor compound they are diluted with the solvents.

The halogenating agent is for substituting the hydrocarbon group or groups with the halogen atom or atoms as stated above and it is preferable to use it in an amount of 0.01 to 10 mols, preferably 0.05 to 5 mols and especially 0.1 to 3 mols based on the 1 mol of the hydrocarbon group of the organomagnesium compound.

The temperature is not especially limitative at the time of the reaction between the organomagnesium compound and the halogenating agent but it is desirable to react them at a low temperature at which the reaction rate does not extremely decreases because they vigorously react at high temperature. In this view point, it ranges from -50° to 100°C, preferably from -30 to 80°C and especially preferably from -20 to 50°C. It is preferable, though it depends on the temperature at the time of the reaction, to conduct the stirring and admixing for 0.1 to 10 hours at the temperature of the reaction or after the temperature is elevated from the reaction temperature upto the extent not more than 150°C after the admixing of the halogenating agent is finished in order to complete the reaction.

The solid state product obtained by the reaction is separated from the reaction system by the solid-liquid separation carried

out by means of the decantation, filtration, centrifugal separation and so on. It is preferable to wash the separated solid state product by a hydrocarbon solvent such as hexane, heptane, kerosene, cyclohexane, methylcyclohexane, benzene, toluene, xylene and the like.

The thus separated solid state product is heated to treat with a mixture of a halogenated silicon compound and a titanium compound shown by the general formula, $Ti(OA)_lX_{4-l}$, wherein A represents an aryl group, X represents a halogen atom and l represents a real number more than zero and less than 4.

The solid state product is suspended into a mixture of the halogenated silicon compound and the titanium compound shown by the general formula, $Ti(OA)_lX_{4-l}$, wherein A, X and l are the same as stated above, in the absence or presence of the hydrocarbon solvent (1 - 99% by volume) and is heated to react at a temperature of 40 to 150°C, preferably 50 to 150°C, especially preferably 60 to 150°C for 0.1 to 10 hours.

The halogenated silicon compound is a compound represented by the general formula $R^{12}_mSiX^2_{4-m}$ and/or $(R^{13}O)_mSiX^2_{4-m}$, wherein $R^{12}$ shows hydrogen or a hydrocarbon group having carbon number of 1 to 10, $R^{13}$ shows a hydrocarbon groups having carbon number of 1 to 10, $X^2$ shows a halogen atom selected from chlorine, bromine and iodine, and m is a real number of $0 \leqq m \leqq 3$. Particularly, silicon tetrachloride, trichlorosilane, monomethyl dichlorosilane, dimethyldichlorosilane, monoethyl trichlorosilane, diethoxy dichlorosilane, monoethoxy trichlorosilane, dimethoxy dichlorosilane, monobutoxy

trichlorosilane and the like can be exemplified.

It is necessary to use the halogenated silicon compound in an amount not less than 0.1 mol based on 1 mol of magnesium existing in the solid state product. An amount less than 0.1 mol can not exert the effect due to the halogenated silicon compound. The upper limit is not especially restricted but it is preferable to use an amount less than 100 mols. If an amount not less than 100 mols might be used there is no remarkable effects due to it.

The halogen X of the compound represented by the general formula, $Ti(OA)_lX_{4-l}$ which is used in this invention is chlorine, bromine, iodine or the like, among which chlorine is especially preferable.

As the aryloxy group OA, p-methyl phenoxy group, ethyl phenoxy group, isopropylphenoxy group, t-butyl phenoxy group, phenyl phenoxy group, β-naphthoxy group, 5-indanoxy group, p-chlorophenoxy group, bromophenoxy groups, phenoxy group, iodophenoxy groups, p-methoxy phenoxy group, ethoxy phenoxy groups, phenoxy phenoxy groups, and the like are listed.

Among them, a p-hydrocarbyl phenoxy group such as p -methylphenoxy group or the like is preferable.

As to the number l, it is more than 0 and less than 4, preferably more than 0 and less than 2, more preferably more than 0 and less than 1, and especially preferably more than 0.02 and less than 0.8.

The activity and the stereospecificity of the catalysts are improved by leaps and bounds by using such an aryloxy titanium halide compound as compared with a case, wherein it

is contacted to react with the corresponding titanium halide or a case wherein the titanium halide is contacted with a carrier which has been contacted to treat with the corresponding phenol.

This aryloxy titanium halide compound can be synthesized by known processes.

One way is that is can be synthesized by a substitution reaction between the corresponding titanium compound containing a halogen and the corresponding phenol. When both the compounds are admixed, the reaction proceeds to generally generate a hydrogen halide. It is necessary to substantially complete this substitution reaction in order to be used in this invention. The completion of the reaction can be confirmed by the existence or absence of absorptions due to OH groups in the infra-red absorption spectrum of the reaction material. When 0.1 mol of titanium tetrachloride and 0.05 mol of p-cresol are admixed at 120°C, for example, HCl gas is vigorously generated for 30 minutes and a titanium compound having an average composition of $(4\text{-}CH_3\text{-}C_6H_5O)_{0.5}TiCl_{3.5}$ is obtained.

As another way, a reaction material resulting from a disproportionation reaction of an orthotitanic acid ester of the corresponding phenol and the corresponding titanium compound containing halogen can also be used. When 0.39 mol of titanium tetrachloride and 0.01 mol of titanium tetra-p-methyl phenolate are admixed, for example, a titanium compound having an average composition of $(4\text{-}CH_3-C_6H_5O)_{0.1}TiCl_{3.9}$ is obtained.

As the titanium compound containing a halogen used in

the above synthesis, titanium tetrahalides such as titanium tetrachloride, titanium tetrabromide, halogenated titanates such as methoxy titanium trichloride, ethoxy titanium trichloride and the like can be exemplified but titanium tetrahalides especially titanium tetrachloride are preferable.

The used amount of the aryloxytitanium halide compound is from 0.1 to 100 ml based on 1 g of the above stated solid state product and especially preferably from 0.5 to 50 ml.

After the solid and liquid are separated by the decantation or filtration and further after the aryloxy titanium compound or the like are washed with a hydrocarbon such as hexane, heptane, a kerosene, cyclohexane, methyl cyclohexane, benzene, toluene, xylene and the like, the catalyst component can be obtained in a slurry state in the hydrocarbon or in a dry state.

The catalyst component obtained by the above processing has particle size abundant in uniformity and is excellent in the flowability.

The catalyst component of this invention can be used by coupling with an organo aluminum compound as a catalyst component for the polymerization or copolymerization of α-olefins.

The organoaluminum compound which can be used by coupling with the catalyst component of this invention, is a compound shown by the general formula, $AlR^{12}_{r}X^{4}_{3-r}$ wherein $R^{12}$ shows a hydrocarbon group having carbon number of 1 to 20, $X^4$ shows a halogen atom selected from fluorine, chlorine, bromine and iodine or hydrogen, r shows a real number of $0 < r \leq 3$.

Particularly, trimethyl aluminum, triethylaluminum, tri-n-propylaluminum, tri-n-butylaluminum, triisobutylaluminum, tri-n-hexylaluminum, tri-2-methylpentylaluminum, tri-n-octylaluminum, tri-n-decylaluminum, diethylaluminum chloride, di-n-propylaluminum chloride, diisobutylaluminum chloride, methylaluminum sesquichloride, ethylaluminum sesquichloride, ethylaluminum dichloride, isobutylaluminum dichloride, diethylaluminum fluoride, diethylaluminum bromide, diethylaluminum iodide, diethylaluminum hydride, diisobutylaluminum hydride, isoprenylaluminum and so on can be exemplified. These organoaluminum compounds can be used alone or by admixture of at least 2 species.

It is preferable that the used amount of the organoaluminum compound, when it is calculated by converting it into the amount in mol of aluminum contained in the organoaluminum compound is from 1 to 1000 expressed in a ratio of the converted value per 1 mol of the titanium contained in the catalyst component of this invention which is used in combination with the organoaluminum compound, that is Al/Ti.

It is possible to allow the coexistence of a known electron donor compound on the polymerization for the purpose of further improving the catalyst performance and the like of the above stated combination catalyst.

As the known electron donor compound which is allowed to coexist, there can be exemplified the electron donor compound which is used in the production of the above stated catalyst component of this invention.

As to the amount of the electron donor compound used on the above stated polymerization, it is desirable to be in a range of 0.01 to 3 mols based on 1 mol of the organoaluminum compound used in combination with the catalyst component of this invention, preferably 0.05 to 2 mol and especially 0.1 to 1 mol.

As to the polymerization (copolymerization) process, the polymerization can be carried out by a suspension polymerization process in which aromatic hydrocarbons such as benzen, toluene, xylene and the like, aliphatic hydrocarbons such as hexane, heptane, octane, kerosene and the like, alicyclic hydrocarbons such as cyclohexane, methyl cyclohexane and the like are used as solvent; a liquid phase polymerization process in which a liquefied α-olefin is used as solvent; or a gas-phase polymerization process in which an α-olefin is polymerized in a gas-phase. As the polymerization (copolymerization) system, it is possible to use a batch system and a continuous flow system.

As to the α-olefins which can be polymerized (copolymerized) by using the catalyst component of this invention, there are organic compounds shown by the general formula $CH_2 = CHR^{13}$, wherein $R^{13}$ represents hydrogen or a hydrocarbon group having 1 to 6 carbon atoms, for example, ethylene, propylene, butene-1, 4-methyl pentene-1, hexane-1, styrene and the like. Control of molecular weight of the polymer on the (co-)polymerization is according to well known methods using hydrogen or diethyl zinc.

As to the polymerization (copolymerization) temperature the polymerization is carried out within a temperature range of 0 to 200°C, desirably 40 to 120°C. It is preferable to carry out the polymerization (copolymerization) under the pressure of atmospheric pressure to 100 atm, desirably from atmospheric pressure to 60 atm.

The polymers which are obtainable in a polymerization (copolymerization) process using the catalyst component of this invention are granular and have particle size abundant in uniformity, large bulk density and very excellent particle characteristics and it is possible to market the polymers without passing them through the peletizing step.

This invention is explained in detail in Examples herein-below.

The polymerization activity (A), the heptan-insoluble component (H.I.), the isotactic index (I.I.) and the bulk density ($\rho$B) have meanings in Examples as follows:

A: The weight (g) of the solid product polymer based on the unit time (hr.), the unit pressure (atm) and the unit weight (g) of the catalyst component.

(weighting of the polymer / weighting of catalyst component hr.atm)

I.I: Weight(g) of n-heptane-insoluble polymer x 100 / weight(g) of total product polymers (%)

$\rho$B: Bulk density (g/ml) of the product solid polymer measured according to method A of ASTM-D-1895-69.

Ti: The content of titanium contained in the catalyst component (% by weight)

H.I: weight(g) of n-heptane-insoluble polymer x 100/ solid product polymer(g) (%)

EXAMPLE 1

(1) Preparation of catalyst component

(1 - 1) Reaction of an organomagnesium compound and a halogenating agent.

n-Butylethyl magnesium was used as the organomagnesium compound. Into a 300 ml four necked flask provided with a stirrer, of which interior had been substituted with dry nitrogen, 161 ml of a n-heptane solution of n-butyl ethyl magnesium (concentration being 0.65 mol/l, made by U.S. Texas Alkyls Corp.) was poured. The flask was immersed in a refrigerant and the solution was cooled to 0°C. After 2.0 ml of ethyl benzoate was added as the electron donor compound into the solution under stirring, which added amount of the ethyl benzoate corresponded to 0.134 mol based on 1 mol of n-butyl ethyl magnesium, 25 ml of carbon tetrachloride diluted with 75 ml of n-heptane was further added dropwise as the halogenating agent, which added amount of carbon tetrachloride corresponded to 2.55 mols based on 1.0 mol of n-butyl ethyl magnesium. After the addition of carbon tetrachloride the solution was maintained under stirring for 40 min at 0°C, 40 min at the normal temperature and 60 min at 80°C to give a solid product.

Then, after the solution was left standing to cool it to the normal temperature the stirring was stopped. After the solid state product was sedimented, the supernatant was extrated by the decantation. After that, 200 ml of n-heptane was again poured into the flask and the stirring, sedimentation and the decantation were repeated 5 times to wash the

solid state product.

(1 - 2) Synthesis of Aryloxytitanium Halide Compound

After a 200 ml flask provided with a stirrer and a thermometer was substituted with argon, 35.7 ml of titanium tetrachloride and 17.3 ml of p-cresol were charged and the temperature was elevated to 120°C. A reaction proceeded with the generation of hydrogen chloride. After the reaction system was maintained at the temperature for 1 hour, 1 ml of the black red colored reaction solution was sampled, of which the infrared absorption spectrum was measured. No absorption due to the stretching vibration of the OH group of p-cresol was observed and a liquid state titanium compound represented by the average composition, $Ti(O\text{-}C_6H_4\text{-}4\text{-}CH_3)_{0.5}Cl_{3.5}$ was obtained.

(1 - 3) Treatment with a Mixture of the Aryloxytitanium Halide Compound and a Halogenated Silicon Compound

Into the liquid reaction product obtained in the above stated (1 - 2) the solid state product obtained in the above stated (1 - 1) was charged and further 60 ml of $SiCl_4$ was charged as the halogenated silicon compound and the mixture was treated for 2 hours at 60°C under stirring. After the treatment, it was left standing to cool and filtered. After the filtered mass was washed 1 l of n-heptane, 10 g of a catalyst component was obtained by effecting the vacuum drying for 5 hours at 40°C.

The resulting catalyst component consisted of particles

having average particle size of 40μ, which particles were abundant in uniformity. As a result of the composition analysis, the content of titanium (Ti) was 2.8%.

(2) Polymerization of Propylene

(2 - 1) Low Pressure Polymerization

(Polymerization Process A)

After 400 ml of n-heptane, 0.5 ml of triethyl aluminum, 0.1 ml of diethyl aluminum chloride and 0.16 ml of ethyl p-anisate were poured into an 1 l flask, of which interior had been substituted by dry nitrogen, 0.1 g of the catalyst component obtained in (1) was charged.

After the internal temperature of the flask was elevated to 70°C, the flask was shaken to agitate and propylene gas was sinultaneously introduced up to the pressure of 2 $kg/cm^2G$ to initiate the polymerization of propylene.

The polymerization of propylene was carried out for 2.5 hours, while the internal temperature and the internal pressure of the flask were maintained at 70°C and 2 $kg/cm^2G$, respectively.

After the completion of the polymerization the shaken agitation and the supply of the propylene gas were stopped and after the propylene gas existing in the flask was purged out of the system, a mixture liquid of methyl alcohol and isopropyl alcohol were pured to decompose the catalyst component. The polymer slurry remaining in the flask was filtered to recover the solid polymer and then the filtrate was evaporated to recover low molecular weight polymers which were dissolved

in the filtrate. Results are shown in Table 1. The I.I of the product polymer was 94.2%.

(2 - 2) High Pressure Polymerization

(Polymerization Process B)

Into a 5 l autoclave, of which interior had been substituted with dry nitrogen, were charged 40 mg of the catalyst component obtained in (1), 0.5 ml of triethylaluminum, 0.1 ml of diethyl aluminum chloride and 0.16 ml of ethyl p-anisate. Then, after hydrogen was introduced into the autoclave to give a hydrogen pressure of 0.4 $kg/cm^2G$, 1.5 kg of liquid propylene were charged by pressure.

Stirring was initiated when the internal temperature of the autoclave reached 80°C by heating, at which time the initiation of the polymerization was deemed. After the polymerization of propylene was carried out for 2 hours, while maintaining the internal temperature of the autoclave at 80°C, the stirring was stopped and the propylene gas remaining in the system was purged to recover the solid polymer.
Results are shown in Table 1.

COMPARATIVE EXAMPLE 1

A catalyst component was prepared in the same way as in Example 1 except for excluding $SiCl_4$ in the heat treatment effected by the mixture of the aryloxytitanium halide compound and the halogenated silicon compound in Example 1. Then, propylene was polymerized according to polymerization process B. Results are shown in Table 1.

EXAMPLE 2

A 500 ml volume flask provided with a dropping funnel and a water-cooled reflux condenser was substituted by dry nitrogen and 14.6 g (0.6 mol) of metallic magnesium powder having 100 to 200 mesh size, 363 ml of n-heptane and a small piece of iodine were charged into the flask, of which temperature was elevated to 95°C. Then a mixture of 0.5 mol of n-butyl chloride and 0.5 mol of di-n-nutyl ether was weighed and charged in the dropping funnel, which was added dropwise under stirring during the course of 2 hours at 90 to 100°C. After the completion of the addition the stirring was further continued for 4 hours at 90 to 100°C and then settled, and the supernatant was recovered in nitrogen. As the result of the analysis of the liquid, this liquid was a heptane solution of an organomagnesium butyl ether coordination compound having the composition of n-BuMgCl, in which the concentration of the organometal was 0.73 mol/l.

The catalyst component was produced in the same way as in Example 1 except for using 143 ml of the n-heptane solution of the above stated n-butyl magnesium chloride·butylether coordination substance as the organomagnesium compound. Then propylene was polymerized according to polymerization process B. Results are shown in Table 1.

EXAMPLE 3

The catalyst component was produced in the same way as in Example 2 except for using 0.105 mol/l of a n-heptane solution of ethyl magnesium chloride·ethylether which had been prepared as the organomagnesium compound in the similar way

as in the production process of the organo magnesium compound of Example 2. Then, propylene was polymerized according to polymerization process B. Results are shown in Table 1.

EXAMPLE 4

The catalyst component was prepared in the same way as in Example 1 except for using 161 ml of a n-heptane solution of di-n-hexyl magnesium (concentration = 0.65 mol/l) as the organomagnesium compound and the polymerization of propylene was carried out according to polymerization process B. Results are shown in Table 1.

EXAMPLE 5

The catalyst component was prepared in the same way as in Example 1 except for using 75 ml of a n-butyl ether solution of n-butyl magnesium chloride (concentration = 1.4 mol/l) as the organomagnesium compound and the polymerization of propylene was carried out according to polymerization process B. Results are shown in Table 1.

EXAMPLE 6

The catalyst component was produced in the same way as in Example 1 except for using trichlorosilane instead of $SiCl_4$ of Example 1 and the polymerization of propylene was carried out according to polymerization process B. Results are shown in Table 1.

EXAMPLE 7

The catalyst component was produced in the same way as in Example 1 except for using 6.8 g of phenol as one of the phenols in the synthesis of the aryloxy titanium halide compound

and the polymerization of propylene was carried out according to polymerization process B. Results are shown in Table 1.

EXAMPLE 8

The catalyst component was produced in the same way as in Example 1 except for using 7.2 g of catechol as one of the phenols in the synthesis of the aryloxy titanium halide compound and the polymerization of propylene was carried out according to polymerization process B. Results are shown in Table 1.

EXAMPLE 9

The catalyst component was produced in the same way as in Example 1 except for using 13.8 g of p-chlorophenol as one of phenols in the synthesis of the aryloxy titanium halide compound and the polymerization of propylene was carried out according to polymerization process B. Results are shown in Table 1.

EXAMPLES 10 to 14

The catalysts were produced in the same way as in Example 1 except for using various classes of electron donor compounds as shown in Table 2 as the coexisting electron donor compound in various amounts instead of 2.0 ml of ethyl benzoate in the reaction of the organomagnesium compound and the halogenating agent. The polymerization of propylene was carried out in the same way as in polymerization process B except for using polymerization catalyst amounts shown in Table 2. Results are shown in Table 2.

Table 1

| Nos. of Examples and Comparative Example | A (g/g.hr.atm) | H.I. (%) | ρB (g/ml) |
|---|---|---|---|
| Example 1 (Polymerization Process A) | 568 | 95.8 | 0.41 |
| Example 1 (Polymerization Process B) | 610 | 94.6 | 0.42 |
| Comparative Example 1 | 372 | 93.6 | 0.40 |
| Example 2 | 620 | 94.1 | 0.43 |
| " 3 | 592 | 93.8 | 0.40 |
| " 4 | 607 | 94.1 | 0.41 |
| " 5 | 598 | 94.6 | 0.43 |
| " 6 | 603 | 94.0 | 0.41 |
| " 7 | 575 | 93.5 | 0.40 |
| " 8 | 608 | 94.0 | 0.42 |
| " 9 | 642 | 94.7 | 0.43 |

Table 2

| No. of Example | Electron Domor Compound | Amount of Electron Donor Compound (ml) | A (g/g.hr.atm) | H.I. (%) | ρB (g/ml) | Polymerization Catalyst | | | |
|---|---|---|---|---|---|---|---|---|---|
| | | | | | | Amount of Catalyst Component (mg) | TEAL (ml) | DECA (ml) | EPA (ml) |
| Example 10 | EPT | 2.5 | 624 | 94.4 | 0.41 | 40 | 0.5 | 0.2 | 0.14 |
| Example 11 | EPA | 6.0 | 588 | 94.7 | 0.43 | 40 | 0.3 | 0.1 | 0.14 |
| Example 12 | EE | 10.0 | 590 | 94.6 | 0.42 | 40 | 0.5 | 0.1 | 0.12 |
| Example 13 | NBE | 21.4 | 643 | 94.2 | 0.44 | 40 | 0.8 | 0.3 | 0.16 |
| Example 14 | NBE | 80.0 | 635 | 94.1 | 0.42 | 40 | 0.3 | 0.2 | 0.14 |

EPT: ethyl p-toluate
EPA: ethyl p-anisate
EE : ethyl ether
NBE: n-butyl ether
NOE : n-octyl ether
TEAL: triethyl aluminum
DEAC: diethyl aluminum chloride

EXAMPLE 15

Into a 300 ml of four necked flask provided with a stirrer, of which interior had been substituted with dry nitrogen poured 143 ml of the n-heptane solution of the n-butylmagnesium chloride·butyl ether coordination substance (concentration = 0.73 mol/l), and which was used in Example 2, the flask was immersed in a refregerant to cool the solution to 0°C. Into the solution 25 g of hexachloroethane (halogenating agent) dissolved in 100 ml of n-heptane was added dropwise under stirring. The catalyst component was produced in the same way as in Example 1 except that a solid state product was obtained by maintaining the solution for 40 min at 0°C, 40 min at normal temperature and 60 min at 80°C under stirring the solution after the addition of hexachloroethane. Propylene was polymerized according to polymerization process B. Results are shown in Table 3.

EXAMPLE 16

The catalyst component was produced in the same way as in Example 15 except for using 0.105 mol of a n-heptane solution of ethyl magnesium chloride·ethyl ether instead of 143 ml of the n-heptane solution of n-butyl magnesium chloride·butyl ether coordination substance used in Example 15 and the polymerization of propylene was carried out according to polymerization process B. Results are shown in Table 3.

EXAMPLE 17

The catalyst component was produced in the same way as in Example 15 except for using a 75 ml of a n-butyl ether

solution of n-butyl magnesium chloride (concentration = 1.4 mol/l) instead of 143 ml of the n-heptane solution of the n-butyl magnesium chloride, butyl ether coordination substance used in Example 15 and the polymerization of propylene was carried out according to polymerization process B. Results are shown in Table 3.

EXAMPLE 18

The catalyst component was produced in the same way as in Example 4 except for using 30 ml of n-butyl ether (an electron donor compound) instead of 2.0 ml of ethyl benzoate used in Example 4 and the polymerization of propylene was carried out according to polymerization process B. Results are shown in Table 3.

Table 3

| No. of Example | A (g/g.hr.atm) | H.I. (%) | $\rho B$ (g/ml) |
|---|---|---|---|
| Example 15 | 619 | 94.0 | 0.42 |
| " 16 | 588 | 93.6 | 0.41 |
| " 17 | 599 | 93.9 | 0.40 |
| " 18 | 647 | 94.2 | 0.42 |

COMPARATIVE EXAMPLE 2

Into a 300 ml four necked flask provided with a stirrer, of which interior had been substituted with dry nitrogen was poured 161 ml of the n-heptane solution of b-butyl ethyl magnesium used in Example 1 and 25 ml of carbon tetrachloride diluted with 75 ml of n-heptane was added dropwise at room temperature. After the addition of carbon tetrachloride, the solution was maintained under stirring at normal temperature

for 80 min and at 80°C for 60 min to obtain a solid state product.

Then, after the solution was left standing to cool to normal temperature the stirring was stopped and after sedimenting the solid state product the suspernatant was extracted by the decantation. After that 200 ml of n-heptane was again poured into the flask the stirring, sedimentation and the decantation were repeated 5 times to wash the solid state product.

Into the flask 100 ml of kerosence was poured to suspend the solid state product. Into the suspension 100 ml of a kerosene solution dissolving 8.7 ml of p-cresol and 2.0 ml of ethyl benzoate was added dropwise, while the suspension was maintained at 30°C under stirring. The solution was elevated in temperature under stirring to 60°C. After the solution was treated at 60°C for 2 hours, the solution was left standing to cool and stirring was stopped. The solid was sedimented and the supernatant was extracted by the decantation. After that, 200 ml of n-heptane was poured into the flask and the stirring, the sedimentation and the decantation were repeated 5 times to wash the treated solid.

This treated solid and 17.9 ml of titanium tetrachloride were poured into a 100 ml four necked flask, provided with a stirrer, of which interior had been replaced with dry nitrogen, and was elevated in temperature to 60°C under stirring in an oil bath and treated at 60°C for 2 hours.

After the treatment, the reaction mixture was filtered.

After the filtration mass was washed 1 l of n-heptane, a catalyst component was obtained by vacuum-drying it at 40°C for 5 hours. Polymerization of propylene was carried out according to polymerization process B. Results were as follows:

A = 158 H.I. = 88.3 ρB = 0.30

COMPARATIVE EXAMPLE 3

A catalyst component was produced in the same way as in Example 1 except for excluding ethyl benzoate as the electron donor compound in the reaction between the organomagnesium compound and carbon tetrachloride in Example 1. Polymerization of propylene was carried out according to polymerization process B. Results were as follows:

A = 147 H.I. = 88.6 ρB = 0.30

COMPARATIVE EXAMPLE 4

A catalyst component was prepared in the same way as in Example 1 except for treating the solid state product of Example 1 only with 35.7 ml of $TiCl_4$ and polymerization of propylene was carried out according to polymerization process B. Results were as follows:

A = 157 H.I. = 88.2 ρB = 0.30

WHAT IS CLAIMED IS:

(1) A process for producing a catalyst component used for polymerization of $\alpha$-olefin comprising treating a solid product which is obtained by reacting an organomagnesium compound shown by the general formula,

R'MgX', wherein R' represents a hydrocarbon group having 1 to 20 carbon atoms and X' represents a halogen atom or a hydrocarbon group having 1 to 20 carbon atoms with a halogenation agent in the presence of an electron donor compound, with a mixture of a halogenated silicon compound and a titanium compound shown by the general formula

$$Ti(OA)_l X_{4-l}$$

wherein A represents an aryl group, X represents a halogen atom and l represents a real number of $0 < l < 4$.

(2) The process for producing the catalyst component used for polymerization of $\alpha$-olefin defined in claim 1, wherein the electron donor compound is at one class of compound selected from organic acid esters, organic ether compounds, polysiloxanes, thioethers, organic ketones and amines, or their mixtures.

(3) The process for producing the catalyst component used for polymerization of $\alpha$-olefin defined in claim 1, wherein the organomagnesium compounds is used after solubilized to a solution state by solvent selected from aliphatic hydrocarbons, alicyclic hydrocarbons, aromatic hydrocarbons, organic ether compounds, amines or their mixture.

(4) The process for producing the catalyst component used for polymerization of α-olefin defined in claim 1, wherein the halogenating agent is a reagent capable of substituting Mg-hydrocarbon bonding in the organomagnesium compound to Mg-halogen bonding.

(5) The process for producing the catalyst component used for polymerization of α-olefin defined in claim 1, wherein the halogenated silicon compound is one represented by the general formula $R^{12}_{m}SiX^{2}_{4-m}$ and/or $(R^{13}O)_{m}SiX^{2}_{4-m}$, in which $R^{12}$ means hydrogen or a hydrocarbon group having carbon number of 1 to 10, $R^{13}$ means a hydrocarbon group having carbon number of 1 to 10, $X^2$ shows a halogen atom and m is a real number fo $0 \leqq m \leqq 3$.